# EUROPEAN PATENT SPECIFICATION

(11) **EP 4 606 599 B1**
(45) Date of publication and mention of the grant of the patent: **08.07.2026**
(21) Application number: 25153387.3
(22) Date of filing: 22.01.2025
(51) Int. Cl.: B60C 1/00, B60C 5/14, B60C 9/20

(54) **PNEUMATIC TIRE**
LUFTREIFEN
PNEUMATIQUE

(30) Priority: 26.02.2024 JP 2024026805
(43) Date of publication of application: 27.08.2025
(73) Proprietor: Sumitomo Rubber Industries, Ltd., Kobe-shi, Hyogo 651-0072 (JP)
(72) Inventor: ONITSUKA, Rena, Kobe-shi, 651-0072 (JP); SAWAKAMI, Isao, Kobe-shi, 651-0072 (JP); IMAI, Daiki, Kobe-shi, 651-0072 (JP); MISAKI, Momoka, Kobe-shi, 651-0072 (JP)
(74) Representative: Manitz Finsterwald Patent- und Rechtsanwaltspartnerschaft mbB

(56) References cited:
- JP-A- 2001 039 109
- US-A1- 2017 151 834
- US-A1- 2018 134 076

## Description

### BACKGROUND OF THE INVENTION

### Field of the Invention

The present invention relates to a pneumatic tire.

### Background Art

Japanese Patent No. 7337333 suggests a tire that is expected to improve rolling resistance occurring when a vehicle starts to run, by specifying a loss tangent of a cap rubber layer of a tread portion and a thickness of the tread portion. Another known tire is disclosed in the document US 2017/151834 A1.

In recent years, vehicles have been required to enhance fuel economy performance, and rolling resistance of tires mounted to vehicles has also been required to be further reduced. As a method for reducing rolling resistance of a tire (hereinafter, referred to as "improve rolling resistance performance"), for example, a method in which the weight of a tire is reduced by reducing a thickness of a belt ply forming a belt layer, is known.

However, in the above-described method, the belt ply is likely to be separated, so that durability of a tread portion may be degraded.

The present invention has been made in view of the aforementioned circumstances, and a main object of the present invention is to provide a pneumatic tire that allows rolling resistance performance to be improved without degrading durability of a tread portion.

### SUMMARY OF THE INVENTION

The present invention is directed to a pneumatic tire that includes: a tread portion; a first sidewall portion continuous with a first end portion of the tread portion in a tire axial direction, the first sidewall portion extending inward in a tire radial direction and including a tire maximum width position; a first bead portion continuous with an inner side of the first sidewall portion in the tire radial direction; a carcass extending from the tread portion to the first bead portion; and an inner liner disposed on a tire inner cavity side of the carcass. The tread portion includes a belt layer having at least one belt ply in which a plurality of steel cords are covered by topping rubber. The one belt ply has an average thickness of 0.66 to 0.98 mm. The inner liner includes an air-impermeable isobutylene-isoprene-rubber layer including butyl-based rubber. On a tire meridional cross-section including a tire rotation axis, the isobutylene-isoprene-rubber layer includes: a first portion extending from a position of a tire equator toward the first end portion to a first position located tire-axially inward of an outer end, in the tire axial direction, of the belt layer so as to be distant from the outer end over a distance of 10 mm in the tire axial direction; a second portion from the first portion to the tire maximum width position; and a third portion from the second portion to an inner end of the isobutylene-isoprene-rubber layer in the tire radial direction. The second portion has an average thickness t2 of 0.8 to 1.3 mm. Each of an average thickness t1 of the first portion and an average thickness t3 of the third portion is less than the thickness t2.

The pneumatic tire of the present invention has the above-described configuration, and thus allows rolling resistance performance to be improved without degrading durability of the tread portion.

### BRIEF DESCRIPTION OF THE DRAWINGS

FIG.1 is a transverse cross-sectional view of a tire according to one embodiment of the present invention;
FIG. 2 is a development showing a cord aligning state of a cord reinforcing layer shown in FIG. 1;
FIG. 3 is an enlarged view of a portion near a first end portion of a tread portion, a first sidewall portion, and a first bead portion in FIG. 1;
FIG. 4 is an enlarged cross-sectional view of a belt ply, a carcass ply, and an inner liner near an end portion of a belt layer in FIG. 3; and
FIG. 5 is a cross-sectional view of a steel cord according to another embodiment.

### DETAILED DESCRIPTION

An embodiment of the present invention will be described below with reference to the drawings. The drawings are depicted so as to include the characteristics of the present invention, but the drawings may include exaggerated expressions, and the dimensional ratio in the drawings may be expressed so as to be different from that of the actual structure in order to aid in understanding of the present invention. The same or common components are denoted by the same reference characters throughout the embodiments, and repeated description is omitted. A known configuration can be adopted as appropriate for a configuration which will not be described herein.

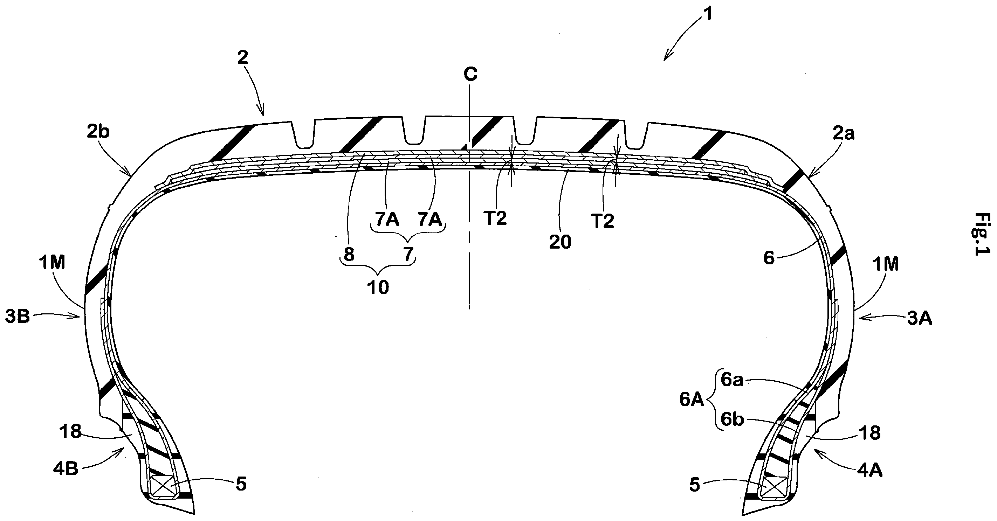

FIG. 1 is a transverse cross-sectional view of a pneumatic tire 1 (hereinafter, may be simply referred to as "tire 1") according to an embodiment of the present invention. FIG. 1 is a tire meridional cross-sectional view of the tire 1 in a standardized state, which includes a tire rotation axis. As shown in FIG. 1, for example, the tire 1 of the present embodiment is suitably used as a pneumatic tire for a passenger car. However, the present invention is not limited thereto, and may be, for example, applied to a heavy duty pneumatic tire.

The "standardized state" refers to a state in which, in the case of a pneumatic tire for which various standards are defined, the tire is mounted on a standardized rim and is inflated to a standardized internal pressure, and no load is applied to the tire. For tires for which various standards are not defined, the standardized state refers to a standard use state, corresponding to a purpose of use of the tire, in which the tire is not mounted to a vehicle and no load is applied to the tire. In the description herein, unless otherwise specified, dimensions and the like of each component of the tire are represented by values measured in the standardized state. Dimensions of components (for example, internal members of the tire 1) which cannot be measured in the standardized state are represented by values measured in a state where the tire 1 is approximated to the standardized state as much as possible.

The "standardized rim" refers to a rim that is defined, in a standard system including a standard on which the tire is based, by the standard for each tire, and is, for example, "standard rim" in the JATMA standard, "Design Rim" in the TRA standard, or "Measuring Rim" in the ETRTO standard.

The "standardized internal pressure" refers to an air pressure that is defined, in a standard system including a standard on which the tire is based, by the standard for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The tire 1 includes a tread portion 2, a first sidewall portion 3A and a second sidewall portion 3B, and a first bead portion 4A and a second bead portion 4B. The first sidewall portion 3A is continuous with a first end portion 2a (right side end portion in the drawings of the present specification) of the tread portion 2 in the tire axial direction, and extends inward in the tire radial direction. The second sidewall portion 3B is continuous with a second end portion 2b (left side end portion in the drawings of the present specification) of the tread portion 2 in the tire axial direction, and extends inward in the tire radial direction. Each of the first sidewall portion 3A and the second sidewall portion 3B includes a tire maximum width position 1M. The first bead portion 4A is continuous with the inner side of the first sidewall portion 3A in the tire radial direction. The second bead portion 4B is continuous with the inner side of the second sidewall portion 3B in the tire radial direction.

The tire 1 includes a carcass 6. The carcass 6 extends at least from the tread portion 2 to the first bead portion 4A. In the present embodiment, the carcass 6 extends from the tread portion 2 to the second bead portion 4B.

The carcass 6 is, for example, formed of one carcass ply 6A. The carcass ply 6A includes, for example, a body portion 6a and turned-up portions 6b. For example, the body portion 6a extends between the first bead portion 4A and the second bead portion 4B. For example, the turned-up portions 6b are continuous with the body portion 6a and are turned up around bead cores 5 from the inner side toward the outer side in the tire axial direction.

The carcass ply 6A includes a plurality of carcass cords, and topping rubber that covers the carcass cords (not shown). For the carcass cord, for example, an organic fiber cord formed of aramid, rayon, or the like is adopted. For example, the carcass cords are preferably aligned at an angle of 70 to 90° relative to the tire equator C. That is, in the present embodiment, the tire 1 has a radial structure carcass.

In the present specification, in a case where numerical ranges of various parameters are described, unless otherwise specified, the numerical range represents a numeral range for the average value of the parameter. Therefore, the above-described numerical range of the angle of the carcass cord represents the average numerical range of angles measured for the plurality of carcass cords at various positions. The same applies to the other parameters described below.

In the present embodiment, the tread portion 2 includes a cord reinforcing layer 10. The cord reinforcing layer 10 is disposed outward of the carcass 6 in the tire radial direction.

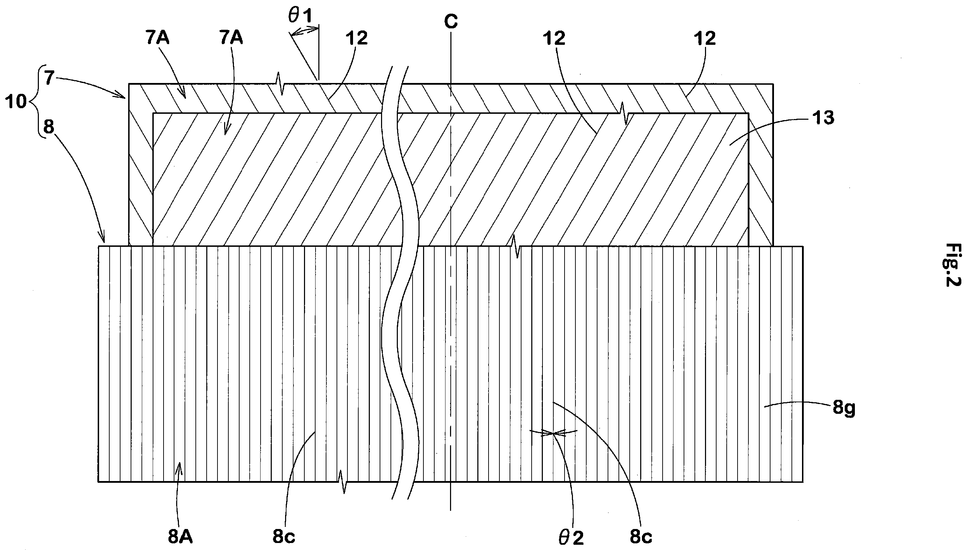

FIG. 2 is a development conceptually showing a cord aligning state of the cord reinforcing layer 10. As shown in FIG. 2, in the present embodiment, the cord reinforcing layer 10 includes at least one belt ply 7A in which a plurality of steel cords 12 are covered by topping rubber 13. In the present embodiment, the cord reinforcing layer 10 includes a belt layer 7 including the belt ply 7A, and a band layer 8.

In the present embodiment, the belt layer 7 includes two belt plies 7A stacked in the tire radial direction. In each of the belt plies 7A, the steel cords 12 are aligned at an angle θ1 of 15 to 45° relative to the tire circumferential direction. The steel cord 12 included in one of the belt plies 7A and the steel cord 12 included in the other of the belt plies 7A are inclined in opposite directions with respect to the tire circumferential direction. Thus, the tread portion 2 is effectively reinforced. As shown in FIG. 1, in the present invention, one belt ply 7A has an average thickness T2 of 0.66 to 0.98 mm.

As shown in FIG. 2, for example, the band layer 8 is formed of one band ply 8A. The band ply 8A includes, for example, a band cord 8c disposed at an angle θ2 of 5° or less relative to the tire circumferential direction, and topping rubber 8g that covers the band cord. In the present embodiment, the band layer 8 is disposed so as to cover the entirety of the belt layer 7.

As shown in FIG. 1, in the present invention, the tire 1 includes an inner liner 20 disposed on the tire inner cavity side of the carcass 6. The inner liner 20 is disposed on the tire inner cavity side of the carcass 6 at least in the tread portion 2, the first sidewall portion 3A, and the second sidewall portion 3B. In the present embodiment, the inner liner 20 is continuous with clinch rubber 18 forming the outer surfaces of the first bead portion 4A and the second bead portion 4B, at the first bead portion 4A and the second bead portion 4B. In FIG. 1, the inner liner 20 is indicated by one kind of hatching. However, as described below, the inner liner 20 includes a plurality of rubber layers.

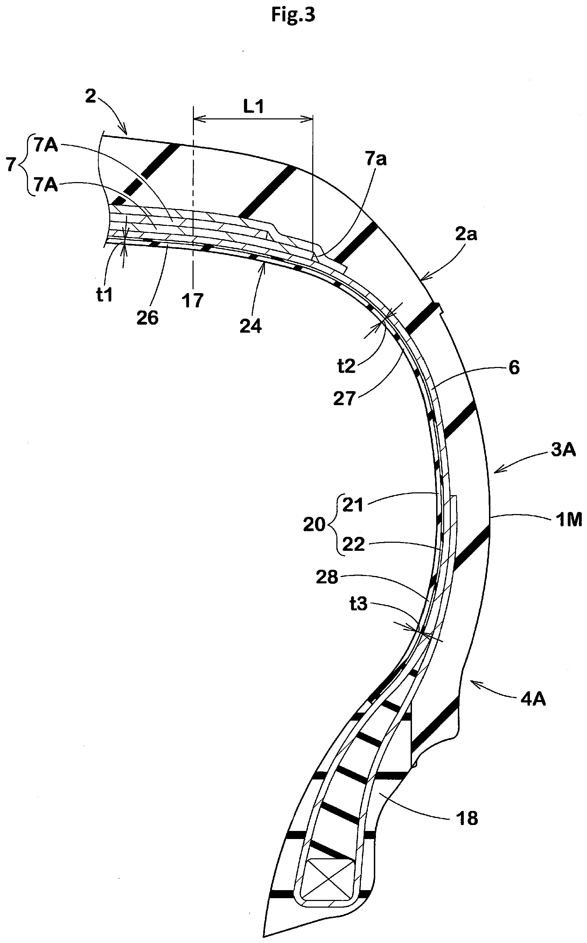

FIG. 3 is an enlarged view of a portion near the first end portion 2a of the tread portion 2, the first sidewall portion 3A, and the first bead portion 4A. As shown in FIG. 3, the inner liner 20 includes an air-impermeable isobutylene-isoprene-rubber layer 21 including butyl-based rubber. In the present embodiment, the inner liner 20 has a tie gum layer 22 having high adhesiveness between the isobutylene-isoprene-rubber layer 21 and the carcass 6.

The isobutylene-isoprene-rubber layer 21 includes a first portion 26, a second portion 27, and a third portion 28. The first portion 26 is a portion that extends from the position of the tire equator C (shown in FIG. 1) toward the first end portion 2a to a first position 17 (indicated by an alternate long and two short dashes line in FIG. 3) located tire-axially inward of an outer end 7a, in the tire axial direction, of the belt layer 7 so as to be distant from the outer end 7a over a distance L1 of 10 mm in the tire axial direction. The second portion 27 is a portion from the first portion 26 to the tire maximum width position 1M. The third portion 28 is a portion from the second portion 27 to an inner end of the isobutylene-isoprene-rubber layer 21 in the tire radial direction.

In the present invention, the second portion 27 of the isobutylene-isoprene-rubber layer 21 has an average thickness t2 of 0.8 to 1.3 mm. Each of an average thickness t1 of the first portion 26 and an average thickness t3 of the third portion 28 is less than the thickness t2. Thus, in the present invention, the tire 1 allows rolling resistance performance to be improved without degrading durability of the tread portion 2. The reason is as follows.

In the tire 1 of the present invention, the average thickness T2 (shown in FIG. 1) of the belt ply 7A is 0.66 to 0.98 mm, and is thus defined as being less as compared with a conventional art. Therefore, the weight of the tread portion 2 can be expected to be reduced, thereby improving rolling resistance performance.

The inventors of the present invention have investigated the cause of separation of a belt ply, which occurs when the thickness of the belt ply is reduced, in conjunction with the above-described improvement. As a result, it has been found that one of the main causes of the separation is permeation of air or water from the tire inner cavity side near the end portion of the belt layer.

Based on the above-described finding, in the present invention, the average thickness t2 of the second portion 27 of the isobutylene-isoprene-rubber layer 21 is set to be 0.8 to 1.3 mm, that is, set to be large. Thus, the above-described permeation of air or water is inhibited, whereby separation of the belt ply 7A can be inhibited. Therefore, durability of the tread portion 2 is improved. In the present invention, each of the average thickness t1 of the first portion 26 and the average thickness t3 of the third portion 28 in the isobutylene-isoprene-rubber layer 21 is less than the thickness t2 of the second portion 27 of the isobutylene-isoprene-rubber layer 21. Thus, the thickness of the inner liner 20 is reduced to reduce the weight of the tire, whereby rolling resistance performance can be further improved.

The structure of the present embodiment will be described below in more detail. The structures described below represent specific modes of the present embodiment. Therefore, needless to say, also when the structures described below are not provided, the present invention can exhibit the above-described effects. Also when any one of the structures described below is applied alone to the tire 1 of the present invention having the above-described features, improvement of performance corresponding to each structure can be expected. Furthermore, in a case where some of the structures described below are applied in combination, complex performance improvement corresponding to the structures can be expected.

The thickness t1 of the first portion 26 is preferably 0.3 to 0.9 mm. The thickness t3 of the third portion 28 is preferably 0.3 to 1.0 mm. Thus, over the entirety of the tire 1, rolling resistance performance can be improved while permeation of air or water is inhibited.

In the present embodiment, among the two belt plies 7A included in the belt layer 7, the belt ply 7A disposed on the inner side in the tire radial direction is in contact with the carcass 6 at least in an end portion region 24 located outward of the first position 17 in the tire axial direction. In a preferable mode, the entirety of the belt ply 7A is in contact with the carcass 6 (shown in FIG. 1).

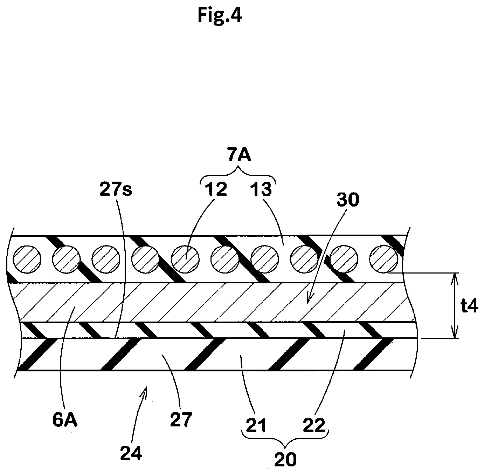

FIG. 4 is an enlarged cross-sectional view of the belt ply 7A, the carcass ply 6A, and the inner liner 20 near the end portion of the belt layer 7 (shown in FIG. 1). For easy understanding of the invention, in FIG. 4, curving of each of actual rubber layers and plies is not represented. In FIG. 4, two kinds of hatchings are used for distinguishing the steel cord 12 and the topping rubber 13 in the belt ply 7A from each other. Meanwhile, the carcass cord and the topping rubber in the carcass ply 6A are not distinguished from each other and uniform hatching is used.

As shown in FIG. 4, a belt end portion inner side region 30 from the plurality of steel cords 12 of the belt ply 7A in the end portion region 24 to an outer surface 27s of the second portion 27 on the carcass 6 side thereof has an average thickness t4 (mm).

As a result of various examinations, it has been found that it is preferable that the thickness t2 (shown in FIG. 3) of the second portion 27 of the isobutylene-isoprene-rubber layer 21 and the thickness t4 of the belt end portion inner side region 30 are comprehensively defined in order to prevent a rubber volume from being excessively increased near the end portion of the belt layer 7 while damage caused by permeation of air or water is assuredly inhibited at the end portion of the belt layer 7. From such a viewpoint, in the present embodiment, a product t4×t2 of the thickness t4 (mm) and the thickness t2 (mm) is set to be 1.3 to 2.1. Thus, durability of the tread portion 2 and rolling resistance performance are improved in a well-balanced manner.

As shown in FIG. 3, for the isobutylene-isoprene-rubber layer 21, a known rubber component is adopted as appropriate. In a preferable mode, a content of the butyl-based rubber in the isobutylene-isoprene-rubber layer 21 is 80% to 100%. The isobutylene-isoprene-rubber layer 21 having such a configuration can assuredly prevent permeation of water or air.

A loss tangent tanδ of the isobutylene-isoprene-rubber layer 21 at 70°C is, for example, 0.15 to 0.25. Thus, energy loss at the inner liner 20 can be made appropriate, and rolling resistance performance and ride comfort are improved in a well-balanced manner. The loss tangent tanδ is measured in the following conditions by using a viscoelasticity spectrometer in accordance with the standard of JIS-K6394.
Initial strain: 10%
Amplitude: ±2%
Frequency: 10 Hz
Deformation mode: tension
Measurement temperature: 70°C

For example, an air permeability coefficient of the isobutylene-isoprene-rubber layer 21 is preferably 18.00×10⁻¹⁴ cm³·cm/(cm²·s·Pa) or less. Thus, air permeation can be assuredly prevented. However, the present invention is not limited to such a configuration. For the air permeability coefficient, a known measurement method is adopted.

As shown in FIG. 1, in the present embodiment, each of the two belt plies 7A has the above-described thickness T2 within the above-described range. The belt layer 7 formed of the belt plies 7A having such a configuration allows the weight to be reduced while an effect of reinforcing the tread portion 2 is exhibited, whereby rolling resistance performance is assuredly improved.

From a similar viewpoint, the weight of one belt ply 7A per unit area is preferably 1350 to 1980 g/m². The weight of the topping rubber per unit area of the one belt ply 7A is preferably 600 to 1300 g/m².

As shown in FIG. 2, the number of the steel cords 12 included in the one belt ply is preferably 40 to 60 per 5 cm width (width in the direction orthogonal to the length direction of the steel cord 12).

For example, as a material of the steel cord 12, any one of a so-called ST material (super tensile material) which is expected to exert a tensile strength of 3600 MPa or higher, a so-called UT material (ultra tensile material) which is expected to exert a tensile strength of 4000 MPa or higher, and a so-called MT material (mega tensile material) which is expected to exert a tensile strength of 4500 MPa or higher is adopted. Therefore, a carbon content of the steel cord 12 is preferably 0.79% to 1.00%. However, the steel cord 12 of the present invention is not limited to such a configuration. For measuring the above-described tensile strength, a known measurement method is adopted.

The one steel cord 12 preferably has a strength of 350 to 540 N. The outer diameter of the steel cord 12 is 0.22 to 0.55 mm and preferably 0.36 to 0.55 mm. Thus, the weight of the tire can be reduced while an effect of the belt layer 7 for reinforcing the tread portion 2 is ensured, whereby rolling resistance performance can be improved. Although the strength is measured by a known method, a measurement method in accordance with JIS G3510 may be adopted as necessary.

The steel cord 12 of the present embodiment has, for example, a 1×1 structure formed of a monofilament (not shown). The outer diameter of the monofilament is, for example, 0.30 to 0.50 mm. However, the present invention is not limited to such a configuration.

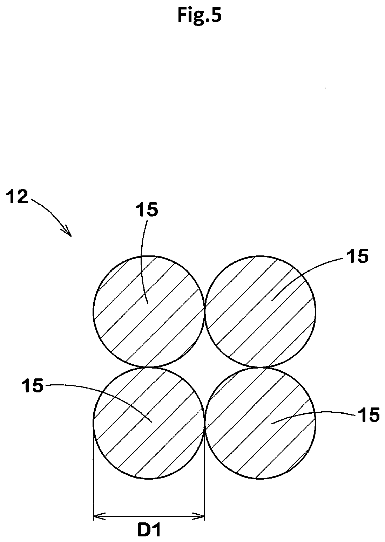

FIG. 5 is a cross-sectional view of the steel cord 12 according to another embodiment. As shown in FIG. 5, the steel cord 12 may have a 1×n structure formed of a plurality (n) of filaments 15. FIG. 5 shows the steel cord 12 having a 1×4 structure. An outer diameter D1 of each of the plurality of filaments 15 is, for example, 0.15 to 0.30 mm. Thus, ride comfort and rolling resistance performance are improved in a well-balanced manner.

Although the tire according to the embodiments of the present invention has been described above in detail, the present invention is not limited to the above-described specific embodiments, and various modifications can be made to implement the present invention.

### [Examples]

Pneumatic tires each having the basic structure shown in FIG. 1 and a size of 205/55R16 were produced as test tires based on the specifications in Table 1. As Comparative examples 1 to 2, tires in which the thickness of the belt ply and the thickness of the isobutylene-isoprene-rubber layer were outside the ranges of the present invention were produced as test tires. The tires of Comparative examples 1 to 2 were substantially the same as the tires of the examples except for the above-described structures. Each test tire was tested for rolling resistance performance and durability of the tread portion. The specifications common to the test tires and the test methods were as follows.
Rim on which the tire was mounted: 16×6.5
Tire internal pressure: 250 kPa

### <Rolling resistance performance>

Rolling resistance of each test tire was measured by a rolling resistance testing machine. The measured rolling resistance was represented by an index as the result. The less the numerical value was, the less the rolling resistance was.

### <Durability of tread portion>

Running with each test tire on a drum tester was performed in a certain condition, and a running distance was measured until the tread portion was damaged. The running distance was represented by an index as the result. The greater the numerical value was, the more excellent the durability of the tread portion was.

### Table 1 indicates the test results.

**[Table 1]**

| | Comp. Ex. 1 | Comp. Ex. 2 | Ex. 1 | Ex. 2 | Ex. 3 | Ex. 4 | Ex. 5 |
|---|---|---|---|---|---|---|---|
| Thickness T2 (mm) of belt ply | 1.02 | 0.73 | 0.73 | 0.73 | 0.82 | 0.82 | 0.82 |
| Thickness t1 (mm) of first portion of isobutylene-isoprene-rubber layer | 0.7 | 0.7 | 0.7 | 0.7 | 0.7 | 0.7 | 0.7 |
| Thickness t2 (mm) of second portion of isobutylene-isoprene-rubber layer | 0.7 | 0.7 | 0.8 | 1.3 | 1.0 | 0.8 | 0.9 |
| Thickness t3 (mm) of third portion of isobutylene-isoprene-rubber layer | 0.7 | 0.7 | 0.7 | 0.7 | 0.7 | 0.7 | 0.7 |
| Thickness t4 (mm) of belt end portion inner side region | 1.7 | 1.7 | 1.6 | 1.6 | 1.6 | 1.6 | 1.6 |
| Product t4×t2 | 1.2 | 1.2 | 1.3 | 2.1 | 1.6 | 1.3 | 1.4 |
| Rolling resistance performance (The less the index is, the better the performance is) | 6.8 | 6.5 | 6.5 | 6.6 | 6.7 | 6.6 | 6.6 |
| Durability of tread portion (The greater the index is, the better the durability is) | 60 | 40 | 60 | 80 | 70 | 62 | 65 |

As indicated in Table 1, in comparison between Comparative example 1 and Comparative example 2, in Comparative example 2, rolling resistance performance was improved since the thickness T2 of the belt ply was small, but durability of the tread portion was significantly degraded. Meanwhile, in Examples 1 to 5, the above-described defect was overcome since the thickness t2 of the second portion of the isobutylene-isoprene-rubber layer was specified as 0.8 to 1.3 mm, and each of the thickness t1 of the first portion and the thickness t3 of the third portion in the isobutylene-isoprene-rubber layer was set to be less than the thickness t2. That is, it can be confirmed that the tire of the present invention allowed rolling resistance performance to be improved without degrading durability of the tread portion.

## Claims

1. A pneumatic tire (1) comprising:
a tread portion (2);
a first sidewall portion (3A) continuous with a first end portion (2a) of the tread portion (2) in a tire axial direction, the first sidewall portion (3A) extending inward in a tire radial direction and including a tire maximum width position (1M);
a first bead portion (4A) continuous with an inner side of the first sidewall portion (3A) in the tire radial direction;
a carcass (6) extending from the tread portion (2) to the first bead portion (4A); and
an inner liner (20) disposed on a tire inner cavity side of the carcass (6), wherein
the tread portion (2) includes a belt layer (7) having at least one belt ply (7A) in which a plurality of steel cords (12) are covered by topping rubber (13),
the inner liner (20) includes an air-impermeable isobutylene-isoprene-rubber layer (21) including butyl-based rubber, **characterised in that** the one belt ply (7A) has an average thickness (T2) of 0.66 to 0.98 mm and, on a tire meridional cross-section including a tire rotation axis, the isobutylene-isoprene-rubber layer (21) includes
a first portion (26) extending from a position of a tire equator (C) toward the first end portion (2a) to a first position (17) located tire-axially inward of an outer end (7a), in the tire axial direction, of the belt layer (7) so as to be distant from the outer end (7a) over a distance (L1) of 10 mm in the tire axial direction,
a second portion (27) from the first portion (26) to the tire maximum width position (1M), and
a third portion (28) from the second portion (27) to an inner end of the isobutylene-isoprene-rubber layer (21) in the tire radial direction,
the second portion (27) has an average thickness t2 of 0.8 to 1.3 mm, and
each of an average thickness t1 of the first portion (26) and an average thickness t3 of the third portion (28) is less than the thickness t2.

2. The pneumatic tire (1) according to claim 1, wherein the thickness t1 is 0.3 to 0.9 mm.

3. The pneumatic tire (1) according to claim 1 or 2, wherein the thickness t3 is 0.3 to 1.0 mm.

4. The pneumatic tire (1) according to any one of claims 1 to 3, wherein
the belt ply (7A) is in contact with the carcass (6) at least in an end portion region (24) located outward of the first position (17) in the tire axial direction,
a belt end portion inner side region (30) from the plurality of steel cords (12) of the belt ply (7A) in the end portion region (24) to an outer surface (27s) of the second portion (27) on the carcass (6) side has an average thickness t4 (mm), and
a product t4×t2 of the thickness t4 (mm) and the thickness t2 (mm) is 1.3 to 2.1.

5. The pneumatic tire (1) according to any one of claims 1 to 4, wherein each steel cord (12) has an outer diameter of 0.22 to 0.55 mm.

6. The pneumatic tire (1) according to any one of claims 1 to 5, wherein
the steel cord (12) has a 1×1 structure formed of a monofilament, and
the monofilament has an outer diameter of 0.30 to 0.50 mm.

7. The pneumatic tire (1) according to any one of claims 1 to 6, wherein
the steel cord (12) has a 1×n structure formed of a plurality (n) of filaments (15), and
each of the plurality of filaments (15) has an outer diameter (D1) of 0.15 to 0.22 mm.

8. The pneumatic tire (1) according to any one of claims 1 to 7, wherein each of the steel cords (12) has a strength of 350 to 540 N.

9. The pneumatic tire (1) according to any one of claims 1 to 8, wherein a carbon content of the steel cord (12) is 0.79% to 1.00%.

10. The pneumatic tire (1) according to any one of claims 1 to 9, wherein a number of the steel cords (12) included in the one belt ply (7A) is 40 to 60 per 5 cm width.

## Patentansprüche

1. Luftreifen (1), umfassend:
einen Laufflächenabschnitt (2);
einen ersten Seitenwandabschnitt (3A), der mit einem ersten Endabschnitt (2a) des Laufflächenabschnitts (2) in einer axialen Richtung des Reifens durchgehend ist, wobei sich der erste Seitenwandabschnitt (3A) in einer radialen Richtung des Reifens nach innen erstreckt und eine Position maximaler Breite (1M) des Reifens umfasst;
einen ersten Wulstabschnitt (4A), der mit einer Innenseite des ersten Seitenwandabschnitts (3A) in der radialen Richtung des Reifens durchgehend ist;
eine Karkasse (6), die sich von dem Laufflächenabschnitt (2) zu dem ersten Wulstabschnitt (4A) erstreckt; und
eine Innenauskleidung (20), die auf einer Reifeninnenhohlraumseite der Karkasse (6) angeordnet ist, wobei
der Laufflächenabschnitt (2) eine Gürtelschicht (7) umfasst, die mindestens eine Gürtellage (7A) aufweist, in der eine Vielzahl von Stahlkorden (12) mit Deckgummi (13) bedeckt sind,
die Innenauskleidung (20) eine luftundurchlässige Isobutylen-Isopren-Gummischicht (21) umfasst, die Gummi auf Butylbasis umfasst,
**dadurch gekennzeichnet, dass**
die eine Gürtellage (7A) eine durchschnittliche Dicke (T2) von 0,66 bis 0,98 mm aufweist, und
auf einem Meridianquerschnitt des Reifens, der eine Reifendrehachse umfasst, die Isobutylen-Isopren-Gummischicht (21) umfasst,
einen ersten Abschnitt (26), der sich von einer Position eines Reifenäquators (C) in Richtung des ersten Endabschnitts (2a) zu einer ersten Position (17) erstreckt, die sich in der axialen Richtung des Reifens von einem äußeren Ende (7a) der Gürtelschicht (7) axial innen befindet, so dass er von dem äußeren Ende (7a) einen Abstand (L1) von 10 mm in der axialen Richtung des Reifens entfernt ist,
einen zweiten Abschnitt (27) von dem ersten Abschnitt (26) zu der Position maximaler Breite (1M) des Reifens, und
einen dritten Abschnitt (28) von dem zweiten Abschnitt (27) zu einem inneren Ende der Isobutylen-Isopren-Gummischicht (21) in der radialen Richtung des Reifens,
der zweite Abschnitt (27) eine durchschnittliche Dicke t2 von 0,8 bis 1,3 mm aufweist, und
sowohl eine durchschnittliche Dicke t1 des ersten Abschnitts (26) als auch eine durchschnittliche Dicke t3 des dritten Abschnitts (28) kleiner als die Dicke t2 ist.

2. Luftreifen (1) nach Anspruch 1, wobei die Dicke t1 0,3 bis 0,9 mm beträgt.

3. Luftreifen (1) nach Anspruch 1 oder 2, wobei die Dicke t3 0,3 bis 1,0 mm beträgt.

4. Luftreifen (1) nach einem der Ansprüche 1 bis 3, wobei
die Gürtellage (7A) mit der Karkasse (6) mindestens in einem Endabschnittsbereich (24) in Kontakt steht, der sich in der axialen Richtung des Reifens außen von der ersten Position (17) befindet,
ein Gürtelendabschnitt-Innenseitenbereich (30) von der Vielzahl von Stahlkorden (12) der Gürtellage (7A) in dem Endabschnittsbereich (24) zu einer Außenfläche (27s) des zweiten Abschnitts (27) auf der Seite der Karkasse (6) eine durchschnittliche Dicke t4 (mm) aufweist, und
ein Produkt t4 × t2 der Dicke t4 (mm) und der Dicke t2 (mm) 1,3 bis 2,1 beträgt.

5. Luftreifen (1) nach einem der Ansprüche 1 bis 4, wobei
jeder Stahlkord (12) einen Außendurchmesser von 0,22 bis 0,55 mm aufweist.

6. Luftreifen (1) nach einem der Ansprüche 1 bis 5, wobei
der Stahlkord (12) eine 1×1-Struktur aufweist, die aus einem Monofilament gebildet ist, und
das Monofilament einen Außendurchmesser von 0,30 bis 0,50 mm aufweist.

7. Luftreifen (1) nach einem der Ansprüche 1 bis 6, wobei
der Stahlkord (12) eine 1×n-Struktur aufweist, die aus einer Vielzahl (n) von Filamenten (15) gebildet ist, und
jedes der Vielzahl von Filamenten (15) einen Außendurchmesser (D1) von 0,15 bis 0,22 mm aufweist.

8. Luftreifen (1) nach einem der Ansprüche 1 bis 7, wobei jeder der Stahlkorde (12) eine Festigkeit von 350 bis 540 N aufweist.

9. Luftreifen (1) nach einem der Ansprüche 1 bis 8, wobei ein Kohlenstoffgehalt des Stahlkords (12) 0,79 % bis 1,00 % beträgt.

10. Luftreifen (1) nach einem der Ansprüche 1 bis 9, wobei eine Anzahl der Stahlkorde (12), die in der einen Gürtellage (7A) enthalten sind, 40 bis 60 pro 5 cm Breite beträgt.

## Revendications

1. Pneumatique (1) comprenant :
une portion de bande de roulement (2) ;
une première portion de flanc (3A) continue avec une première portion d'extrémité (2a) de la portion de bande de roulement (2) dans une direction axiale du pneumatique, la première portion de flanc (3A) s'étendant vers l'intérieur dans une direction radiale du pneumatique et incluant une position de largeur maximale (1M) du pneumatique ;
une première portion de talon (4A) continue avec un côté intérieur de la première portion de flanc (3A) dans la direction radiale du pneumatique ;
une carcasse (6) s'étendant de la portion de bande de roulement (2) à la première portion de talon (4A) ; et
un revêtement intérieur (20) disposé sur un côté de la cavité intérieure du pneumatique de la carcasse (6), dans lequel
la portion de bande de roulement (2) inclut une couche de ceinture (7) comportant au moins une nappe de ceinture (7A) dans laquelle une pluralité de câblés d'acier (12) sont recouverts par de la gomme d'enrobage (13),
le revêtement intérieur (20) inclut une couche de caoutchouc isobutylène-isoprène (21) imperméable à l'air incluant du caoutchouc à base de butyle,
**caractérisé en ce que**
ladite nappe de ceinture (7A) a une épaisseur moyenne (T2) de 0,66 à 0,98 mm, et
sur une coupe méridienne du pneumatique incluant un axe de rotation du pneumatique, la couche de caoutchouc isobutylène-isoprène (21) inclut
une première portion (26) s'étendant d'une position d'un équateur du pneumatique (C) vers la première portion d'extrémité (2a) jusqu'à une première position (17) située axialement vers l'intérieur par rapport à une extrémité extérieure (7a), dans la direction axiale du pneumatique, de la couche de ceinture (7) de manière à être distante de l'extrémité extérieure (7a) sur une distance (L1) de 10 mm dans la direction axiale du pneumatique,
une deuxième portion (27) de la première portion (26) à la position de largeur maximale (1M) du pneumatique, et
une troisième portion (28) de la deuxième portion (27) à une extrémité intérieure de la couche de caoutchouc isobutylène-isoprène (21) dans la direction radiale du pneumatique,
la deuxième portion (27) a une épaisseur moyenne t2 de 0,8 à 1,3 mm, et
chacune d'une épaisseur moyenne t1 de la première portion (26) et d'une épaisseur moyenne t3 de la troisième portion (28) est inférieure à l'épaisseur t2.

2. Pneumatique (1) selon la revendication 1, dans lequel l'épaisseur t1 est de 0,3 à 0,9 mm.

3. Pneumatique (1) selon la revendication 1 ou 2, dans lequel l'épaisseur t3 est de 0,3 à 1,0 mm.

4. Pneumatique (1) selon l'une quelconque des revendications 1 à 3, dans lequel
la nappe de ceinture (7A) est en contact avec la carcasse (6) au moins dans une région de portion d'extrémité (24) située à l'extérieur de la première position (17) dans la direction axiale du pneumatique,
une région du côté intérieur de la portion d'extrémité de ceinture (30) de la pluralité de câblés d'acier (12) de la nappe de ceinture (7A) dans la région de portion d'extrémité (24) à une surface extérieure (27s) de la deuxième portion (27) du côté de la carcasse (6) a une épaisseur moyenne t4 (mm), et
un produit t4 × t2 de l'épaisseur t4 (mm) et de l'épaisseur t2 (mm) est de 1,3 à 2,1.

5. Pneumatique (1) selon l'une quelconque des revendications 1 à 4, dans lequel
chaque câblé d'acier (12) a un diamètre extérieur de 0,22 à 0,55 mm.

6. Pneumatique (1) selon l'une quelconque des revendications 1 à 5, dans lequel
le câblé d'acier (12) a une structure 1×1 formée d'un monofilament, et
le monofilament a un diamètre extérieur de 0,30 à 0,50 mm.

7. Pneumatique (1) selon l'une quelconque des revendications 1 à 6, dans lequel
le câblé d'acier (12) a une structure 1×n formée d'une pluralité (n) de filaments (15), et
chacun de la pluralité de filaments (15) a un diamètre extérieur (D1) de 0,15 à 0,22 mm.

8. Pneumatique (1) selon l'une quelconque des revendications 1 à 7, dans lequel chacun des câblés d'acier (12) a une résistance de 350 à 540 N.

9. Pneumatique (1) selon l'une quelconque des revendications 1 à 8, dans lequel une teneur en carbone du câblé d'acier (12) est de 0,79 % à 1,00 %.

10. Pneumatique (1) selon l'une quelconque des revendications 1 à 9, dans lequel un nombre de câblés d'acier (12) compris dans ladite nappe de ceinture (7A) est de 40 à 60 par 5 cm de largeur.
